Europäisches Patentamt

(19) European Patent Office

Office européen des brevets

(11) Veröffentlichungsnummer: **0 143 871**
**B1**

(12) # EUROPÄISCHE PATENTSCHRIFT

(45) Veröffentlichungstag der Patentschrift:
10.06.87

(51) Int. Cl.⁴: **B 27 C 3/06**

(21) Anmeldenummer: **84104468.8**

(22) Anmeldetag: **19.04.84**

(54) **Verdübelungs-Bohrlehre.**

(30) Priorität: **27.10.83 DE 3338912**

(43) Veröffentlichungstag der Anmeldung:
**12.06.85 Patentblatt 85/24**

(45) Bekanntmachung des Hinweises auf die Patenterteilung:
**10.06.87 Patentblatt 87/24**

(84) Benannte Vertragsstaaten:
**AT CH DE FR GB LI NL**

(56) Entgegenhaltungen:
**DE-A-2 437 724**
**DE-A-3 105 180**
**US-A-4 145 160**

(73) Patentinhaber: **Wolff, Robert, Im Kiesacker 12,
D-5446 Engeln (DE)**

(72) Erfinder: **Zimmermann, Hartmut, 26, Bis Grande
Rue Loivre, F-89970 La Celle St. Cyr (FR)**
Erfinder: **Brown, Geoff, 22, Manor Court Av. Road
Royal Leamington, Warwickshire CV 31 3 NL (GB)**

(74) Vertreter: **Peerbooms, Rudolf, Dipl.- Phys.,
Postfach 200 208 Dickmannstrasse 45C, D-5600
Wuppertal 2 (DE)**

## Beschreibung

Die Erfindung betrifft eine Verdübelungs-Bohrlehre für zwei miteinander zu verdübelnde Platten, Bretter oder ähnliche Werkstücke mit zwei übereinanderliegenden Werkstückaufnahmeräumen die durch ein von einer Grundplatte rechtwinklig abragendes Distanzstück getrennt sind, an welchem beide Werkstücke flachseitig und mit an die Grundplatte anstoßenden Stirnflächen gleichzeitig festspannbar sind wobei in der Grundplatte mindestens ein in einen der Werkstückaufnahmeräume mündendes Bohrloch vorgesehen ist.

Durch die DE-PS 24 37 724 ist eine Verdübelungs-Bohrlehre in Form einer Doppelschraubzwinge bekannt, in welcher von zwei zu verdübelnden Platten, Brettern oder ähnlichen Werkstücken eines liegend und eines stehend eingespannt werden kann, wobei über Bohrführungslöcher in die beiden Werkstücke paarweise einander zugeordnete Dübellöcher eingebracht werden können. Die dortige Verdübelungs-Bohrlehre erleichtert das exakte Einbringen von Dübellöchern erheblich eignet sich jedoch ausschließlich für stirn-flachseitige Verdübelungen.

Durch die DE-OS 31 05 180 ist weiterhin eine Bohrlehre mit zwei übereinanderliegenden Werkstückaufnahmeräumen bekannt, die durch ein von einer Grundplatte rechtwinklig abragendes Distanzstück getrennt sind, an welchem zwei zu verdübelnde Werkstücke flachseitig und mit an die Grundplatte anstoßenden Stirnflächen gleichzeitig festspannbar sind, wobei in der Grundplatte mindestens ein in einen der Werkstückaufnahmeräume mündendes Bohrloch vorgesehen ist. Auch diese Bohrlehre eignet sich ausschließlich für stirn-flachseitige Verdübelungen. In der Praxis kommen jedoch immer wieder Fälle vor, in denen Platten, Bretter oder ähnliche Werkstücke stirn-stirnseitig verdübelt werden sollen.

Der Erfindung liegt die Aufgabe zugrunde, eine gattungsgemäße Verdübelungs-Bohrlehre zu schaffen, die für stirn-stirnseitige Verdübelungen eingesetzt werden kann.

Diese Aufgabe ist erfindungsgemäß dadurch gelöst, daß in der Grundplatte mindestens ein weiteres, in den anderen Werkstückaufnahmeraum mündendes Bohrloch vorgesehen ist, welches in gleichem Abstand vom Distanzstück wie das andere Bohrloch und in derselben Vertikalebene wie das andere Bohrloch angeordnet ist. Bei dieser Ausbildung der Verdübelungs-Bohrlehre können zwei Werkstücke liegend übereinander eingespannt und jewells stirnseitig mit einander zugeordneten Dübellöchern versehen werden. Durch die Anordnungen der beiden Bohrlöcher im gleichen Abstand vom Distanzstück und in derselben Vertikalebene ergeben sich ohne umständliche Vermessungen paßgenaue stirn-stirnseltige Verdübelungen, was gerade bei dieser Verdübelungsart von großer Bedeutung ist, da schon leichte Kantenversetzungen das Arbeitsergebnis unbrauchbar machen.

Nach einer bevorzugten Ausführungsform der Erfindung kann für einen der Werkstückaufnahmeräume eine umsetzbare, wahlweise an dem Distanzstück oder an der Grundplatte anbringbare Festspanneinrichtung für das Werkstück vorgesehen sein und kann das Werkstück entsprechend entweder liegend oder stehend in diesem Werkstückaufnahmeraum festspannbar sein. Mit dieser Ausführungsform der Bohrlehre sind nicht nur stirn-stirnseitige, sondern auch stirn-flachseitige Verdübelungen ausführbar, wodurch sich ihre Einsatzmöglichkeiten erheblich erweitern. Bei dieser universal einsetzbaren Form kann eines der beiden Werkstücke stets liegend eingespannt und stirnseitig mit Dübellöchern versehen werden, während das andere Werkstück wahlweise entweder liegend oder stehend im Werkstückaufnahmeraum festgespannt und entsprechend entweder stirnseitig oder flachseitig mit Dübellöchern versehen wird. In beiden Fällen ist eine paßgenaue Zuordnung der Dübellöcher gegeben.

In Ausgestaltung der Erfindung kann dle Festspanneinrichtung aus einem an die Grundplatte bzw. an das Distanzstück verdrehfest ansteckbaren Kragstück mit darin geführter Zwingenschraube bestehen. Die Bohrlehre läßt sich damit in einfacher Weise von stirnstirnseitlge auf stirn-flachseitige Verdübelungen umrüsten, da ein aufwendiges An- und Abschrauben der umsetzbaren Festspanneinrichtung oder dgl. entfällt. Denn in gelöstem Zustand kann das Kragstück bequem umgesteckt werden und erhält dann nach dem Anziehen der Zwingenschraube durch die damit verbundene Klemmwirkung einen sicheren Halt an der Grundplatte bzw. an dem Distanzstück.

Der Erfindung zufolge können in jeden Werkstückaufnahmeraum mehrere, im Durchmesser unterschiedliche, paarweise einander zugeordnete Bohrlöcher münden. Durch die Anordnung mehrerer, im Durchmesser unterschiedlicher Bohrlöcher können sämtliche gängigen Dübelgrößen berücksichtigt werden, so daß eine einzige Bohrlehre für alle denkbaren Fällen genügt.

In weiterer Ausgestaltung der Erfindung kann die Grundplatte mindestens im Bereich eines Werkstückaufnahmeraumes als ebene Platte ausgebildet sein, welche an ihrem dem Distanzstück abgewandten Rand mit Schlitzen zum Abgreifen von an einem anderen Werkstück angebrachten Dübeln·versehen ist, wobei die Schlitze jeweils in Fluchtung mit zusätzlichen Bohrlöchern liegen, die zwischen den Schlitzen und den distanzstücknahen Bohrlöchern liegen. Die Anordnung von Schlitzen und zusätzllchen Bohrlöchern ist für den Fall sinnvoll, daß bei stirn-flachseitigen Verdübelungen nicht ein Eck-, sondern ein T-Stoß ausgeführt werden soll. In einem ersten Arbeitsgang kann dann ein Werkstück mit Hilfe der Bohrlehre mit stirnseitigen Dübellöchern versehen werden. In einem zweiten Arbeitsgang wird dieses Brett mit eingesteckten Dübeln mit der vorgebohrten Stirnseite parallel zur beabsichtigten Montagerichtung auf das zweite Brett gelegt. Mit den Schlitzen können danach die eingesteckten Dübel abgegriffen werden; die in Fluchtung liegenden zusätzlichen Bohrlöcher dienen zur Einbringung von flachseitigen Dübellöchern in dem zweiten Brett. Die bereits vorhandenen, in der Nähe des Distanzstückes liegenden Bohrlöcher können deshalb nicht für diesen besonderen Anwendungsfall genutzt werden, weil sie zu eng am Distanzstück liegen und somit die Bohrarbeiten behindert würden. Trotz der zusätzlichen Schlitze und Bohrlöcher wird die Bohrlehre kaum größer, wenn diese im Bereich eines ansteckbaren Kragstückes angeordnet werden. Zu entsprechenden Verdübelungsarbeiten kann das Kragstück abgenommen werden.

Nach einer weiteren Ausführungsform der Erfindung kann die Grundplatte in einem rahmenförmigen Rückenschenkel einer Schraubzwinge verschiebbar, mit in den Zwingenraum ragendem Distanzstück gelagert sein, und kann der Tischauflageschenkel der Zwinge mit ein oder mehreren Bohrlöchern versehen sein, deren Abstand zum Rückenschenkel der Zwinge gleich dem Abstand der grundplattenseitigen Bohrlöcher vom Distanzstück ist. Auch diese Variante eignet sich sowohl zum stirn-stirnseitigen als auch zum stirn-flachseitigen Verdübeln. Das zusätzliche Bohrloch, bzw. die zusätzlichen Bohrlöcher im Tischauflageschenkel der Zwinge ermöglichen es, daß beide Werkstücke nicht nur beim stirn-stirnseitigen, sondern auch beim stirn-flachseitigen Verdübeln in liegender Position eingespannt werden können. Beim stirn-flachseitigen-Verdübeln müssen nunmehr allerdings die flachseitigen Dübellöcher in vertikaler Richtung durch die Bohrlöcher des Tischauflageschenkels hindurch eingebracht werden.

Die Erfindung wird im folgenden anhand der Zeichnung näher beschrieben. In der Zeichnung zeigen:

Fig. 1 in Seitenansicht eine Verdübelungs-Bohrlehre für stirn-stirnseitige Verdübelungen in verkleinertem Maßstab,

Fig. 2 zwei stirn-stirnseitig verdübelte Werkstücke,

Fig. 3 eine Bohrlehre zum sowohl stirn-stirnseitigen als auch stirn-flachseitigen Verdübeln in Seitenansicht,

Fig. 4 einen Schnitt durch die Bohrlehre entlang einer Linie IV-IV in Fig. 3 Fig. 5 die Bohrlehre gemäß einer Blickrichtung V in Fig 3,

Fig. 6 die Bohrlehre beim Abgreifen von Dübeln für stirn-flachseitige T-Stoß-Verdübelungen und

Fig. 7 eine weitere Ausführungsform einer Bohrlehre für sowohl stirn-stirnseitige als auch stirn-flachseitige Verdübelungen.

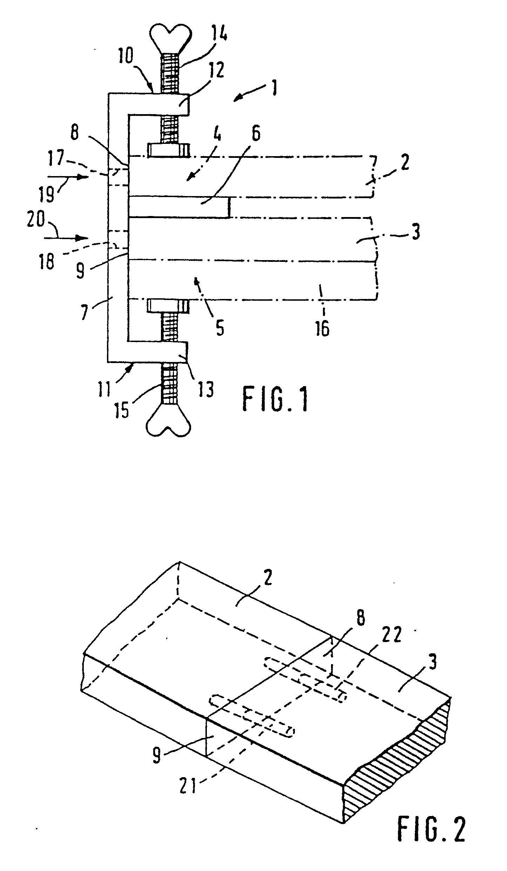

Fig. 1 zeigt eine Bohrlehre 1 zum stirn-stirnseitigen Verdübeln von zwei Werkstücken 2, 3, welche in zwei Werkstückaufnahmeräume 4, 5, eingeführt sind. Die Werkstückaufnahmeräume 4, 5 sind durch ein Distanzstück 6 voneinander getrennt, welches von einer Grundplatte 7 rechtwinklig abragt. Die beiden Werkstücke 2, 3 sind flachseitig und mit an die Grundplatte 7 anstoßenden Stirnflächen 8, 9 an dem Distanzstück 6 mit Hilfe von Festspanneinrichtungen 10, 11 festspannbar. Die Festspanneinrichtungen 10, 11 sind als feststehende Kragarme 12, 13 ausgeführt, welche von Zwingenschrauben 14, 15 durchsetzt sind. Das untere Werkstück 3 ist liegend auf der Platte 16 einer Werkbank oder dgl. angeordnet, wobei die untere Festspanneinrichtung 11 so weit vom Distanzstück 6 entfernt liegt, daß sie die Platte 16 und das Werkstück 3 gemeinsam festspannen kann. Die Grundplatte 7 weist zwei in Werkstückaufnahmeräume 4, 5 mündende Bohrlöcher 17, 18 auf, durch welche zwei Dübellöcher in den Pfeilrichtungen 19, 20 in die Stirnflächen 8, 9 der Werkstücke 2, 3 eingebracht werden können. Die Bohrlöcher 17, 18 haben den gleichen Abstand vom Distanzstück 6 und befinden sich in derselben Vertikalebene so daß sich in beiden Werkstücken 2, 3 einander zugeordnete Dübellöcher ergeben.

Unter der Voraussetzung, daß die Werkstücke 2, 3 an einer zweiten Stelle in ähnlicher Weise an die Platte 16 der Werkbank festgespannt sind, z. B. mittels einer gleichartigen, zweiten Verdübelungs-Bohrlehre, ist es nun möglich, die Festspanneinrichtungen 10, 11 zu lösen, sie längs der Stirnflächen 8, 9 zu verschieben, sie in beliebigem Abstand von der Ausgangsposition erneut festzuspannen und dort erneut Dübellöcher in die Stirnflächen 8, 9 einzubringen. Nach dem Ablösen der Bohrlehre 1 können dann, wie Fig. 2 zeigt, z. B. zwei Dübel 21, 22 in das Werkstück 3 eingeschoben werden, das Werkstück 2 kann um 180° umgeklappt werden, und die Stirnflächen 8, 9 können paßgenau aneinandergesetzt werden.

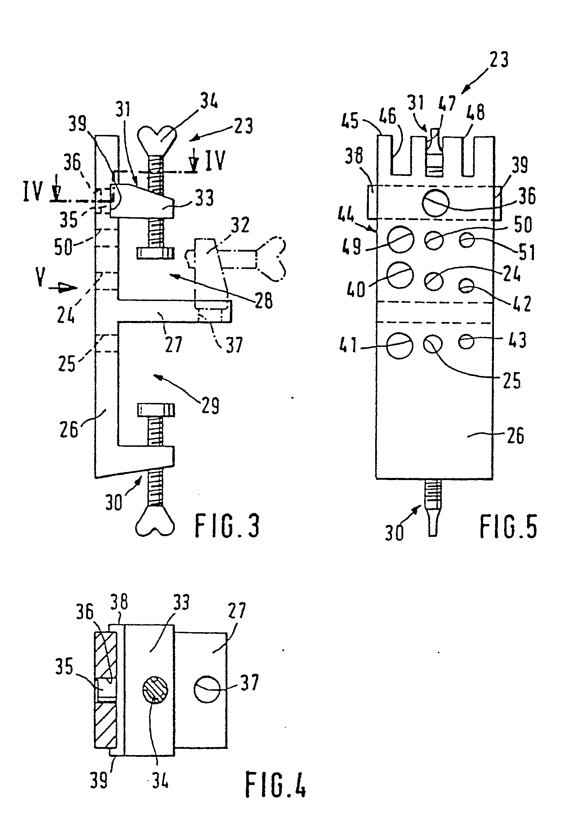

Fig. 3 zeigt eine Bohrlehre 23, welche wiederum eine mit Bohrlöchern 24, 25 versehene Grundplatte 26 aufweist. Von der Grundplatte 26 ragt ein Distanzstück 27 ab, welches zwei Werkstückaufnahmeräume 28, 29 voneinander trennt. Die Bohrlehre 25 ist mit einer unteren, festen Festspanneinrichtung 30 ausgerüstet, die in so großem Abstand vom Distanzstück 27 liegt, daß wiederum - analog zu Fig. 1 - ein Werkstück 3 zusammen mit einer Platte 16 eingespannt werden kann.

Die obere Festspanneinrichtung 31 ist wahlweise an der Grundplatte 26 oder an dem Distanzstück 27 anbringbar. Ist die Festspanneinrichtung 31 an der Grundplatte 26 montiert, so ist über das Bohrloch 24 das Einbringen stirnseitiger Dübellöcher möglich. Wird die Festspanneinrichtung 31 in die gestrichelte Position 32 an das Distanzstück 27 umgesetzt, so kann ein Werkstück stehend in den Werkstückaufnahmeraum 28 eingespannt und können über das Bohrloch 24 flachseitige Dübellöcher eingebracht werden.

Wie Fig. 3 und Fig. 4 zeigen, besteht die Festspanneinrichtung 31 aus einem Kragstück 33 und einer darin geführten Zwingenschraube 34. Das Kragstück 33 weist dabei einen Zapfen 35 auf, welcher in Aufnahmebohrungen 36, 37 in der Grundplatte 26 bzw. dem Distanzstück 27 eingeführt werden kann. Zwei seitliche Führungen 38, 39 an dem Kragstück 33 sorgen dafür, daß dieses sich gegenüber der Grundplatte 26 bzw. dem Distanzstück 27 nicht verdrehen kann.

Wie Fig. 5 zeigt, ist die Grundplatte 26 der Bohrlehre 23 neben den Bohrlöchern 24, 24 mit Bohrlöchern 40, 41, 42, 43 versehen, welche der Übersichtlichkeit halber in Fig. 3 nicht eingezeichnet sind. Die Bohrlöcher 40, 41, 42, 43 weisen einen größeren bzw. kleineren Durchmesser als die Bohrlöcher 24, 25 auf und ermöglichen damit den Einsatz der Bohrlehre 23 für verschiedene Größenklassen von Dübeln. Die Funktionsweise der Bohrlehre 23 ändert sich dadurch grundsätzlich nicht.

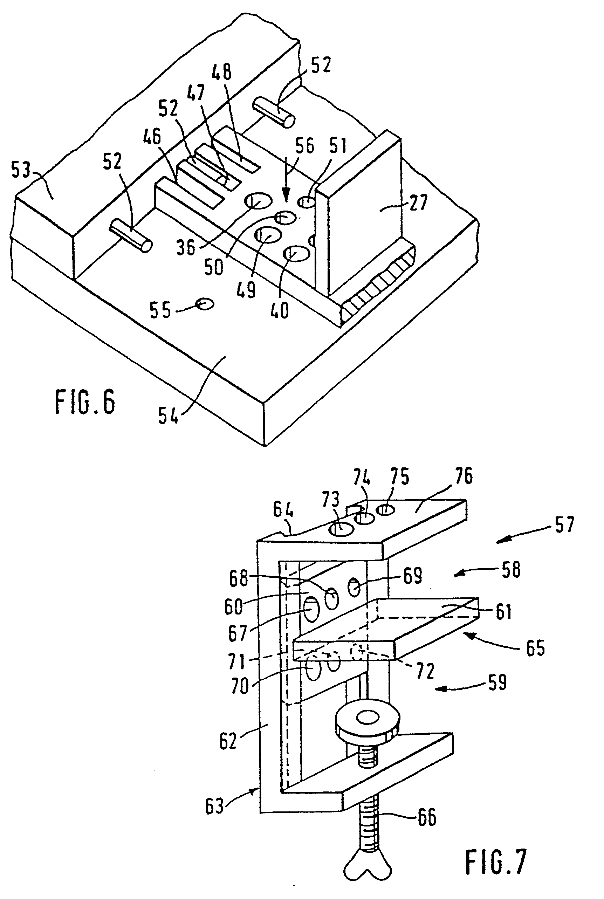

Gemäß Fig. 5 ist die Bohrlehre 23 im Bereich des Werkstückaufnahmeraums 28 als ebene Platte 44 ausgebildet, welche an ihrem dem Distanzstück 27 abgewandten Rand 45 mit Schlitzen 46, 47, 48 versehen ist. Die Schlitze 46, 47, 48 liegen jeweils in Fluchtung mit zusätzlichen Bohrlöchern 49, 50, 51. Gemäß Fig. 6 dienen die Schlitze 46, 47, 48 zum Abgreifen von Dübeln 52, welche stirnseitig in ein Werkstück 53 eingesetzt sind. Das Werkstück 53 liegt dabei flachseitig auf einem Werkstück 54, in welches z. B. über die Bohrung 48 korrespondierende Dübellöcher 55 eingebracht werden. Damit ein Bohrer, welcher in Pfeilrichtung 56 angesetzt wird, nicht durch das Distanzstück 27 behindert wird, müssen die zusätzlichen Bohrlöcher 49, 50, 51 in genügendem Abstand von dem Distanzstück 27 liegen, d. h. sie müssen zwischen den Schlitzen 46, 47, 48 und den distanzstücknahen Bohrlöchern 40, 24, 42 liegen.

Fig. 7 zeigt eine Bohrlehre 57, welche ebenfalls zwei Werkstückaufnahmeräume 58, 59 sowie eine Grundplatte 80 mit einem rechtwinklig abragenden Distanzstück 61 aufweist. Die Grundplatte 60 ist dabei in einem rahmenförmigen Rückenschenkel 52 einer Schraubzwinge 63 verschiebbar gelagert, wobei beispielsweise V-Nuten 64 oder dgl. als Führung für die Grundplatte 60 dienen können. Das Distanzstück ragt dabei in den Zwingenraum 65. Bei dieser Form einer Bohrlehre 57, bei der die Grundplatte 60 mit Distanzstück 61 verschiebbar ist, genügt eine einzige Zwingenschraube 66 zur Befestigung von - hier nicht gezeigten - Werkstücken in den Werkstückaufnahmeräumen 58, 59. Zur Ausführung von stirn-stirnseitigen Verdübelungen dienen Bohrlöcher 67, 68, 69, 70, 71, 72. Im Falle von stirn-flachseitigen Verdübelungen ist der obere Werkstückaufnahmeraum 58 außerdem über Bohrlöcher 73, 74, 75 im Tischauflageschenkel 76 der Schraubzwinge 63 zugänglich, deren Abstand zum Rückenschenkel 62 gleich dem Abstand der grundplattenseitigen Bohrlöcher 67, 68, 69 bzw. 70, 71, 72 vom Distanzstück 61 ist. Die in die Bohrlehre 57 eingespannten Werkstücke können also stets in einer horizontalen Lage verbleiben, während die Bohrrichtung je nach Anwendungsfall horizontal oder vertikal sein kann.

**Patentansprüche**

1. Verdübelungs Bohrlehre (23) für zwei miteinander zu verdübelnde Platten, Bretter oder ähnliche Werkstücke, mit zwei übereinanderliegenden Werkstückaufnahmeräumen (28, 29), die durch ein von einer Grundplatte (26) rechtwinklig abragendes Distanzstück (27) getrennt sind, an welchem beide Werkstücke flachseitig und mit an die Grundplatte (26) anstoßenden Stirnflächen gleichzeitig festspannbar sind wobei in der Grundplatte (26) mindestens ein in einen der Werkstückaufnahmeräume (29) mündendes Bohrloch (25) vorgesehen ist, dadurch gekennzeichnet daß in der Grundplatte (7, 26, 60) mindestens ein weiteres, in den anderen Werkstückaufnahmeraum (4, 28, 58) mündendes Bohrloch (17, 24, 68) vorgesehen ist, welches in gleichem Abstand vom Distanzstück (6, 27, 61) wie das andere Bohrloch (18, 25, 71) und in derselben senkrecht zur Seitenwand des Diestanzstückes stehenden Ebene wie das andere Bohrloch (18, 25, 71) angeordnet ist.

2. Verdübelungs-Bohrlehre nach Anspruch I, dadurch gekennzeichnet, daß für einen der Werkstückaufnahmeräume (28) eine umsetzbare, wahlweise an dem Distanzstück (27) oder an der Grundplatte (26) anbringbare Festspanneinrichtung (31) für das Werkstück vorgesehen ist. und daß das Werkstück entsprechend entweder liegend oder stehend in diesem Werkstückaufnahmeraum (28) festspannbar ist.

3. Verdübelungs-Bohrlehre nach Anspruch 2, dadurch gekennzeichnet, daß die Festspanneinrichtung (31) aus einem an die Grundplatte (26) bzw. an das Distanzstück (27) verdrehungsfest ansteckbaren Kragstück (33) mit darin geführter Zwingenschraube (34) besteht.

4. Verdübelungs-Bohrlehre nach einem oder mehreren der vorangegangenen Ansprüche, dadurch gekennzeichnet, daß in jeden Werkstückaufnahmeraum (28, 29) mehrere, im Durchmesser unterschiedliche, paarweise einander zugeordnete Bohrlöcher (40, 24, 42; 41, 25, 43) münden.

5. Verdübelungs-Bohrlehre nach einem der Ansprüche 1 bis 4, dadurch gekennzeichnet, daß die Grundplatte (26) mindestens im Bereich eines Werkstückaufnahmeraumes (28) als ebene Platte (44) ausgebildet ist, welche an ihrem dem Distanzstück (27) abgewandten Rand (45) mit Schlitzen (46, 47, 48) zum Abgreifen von an einem anderen Werkstück (53) angebrachten Dübeln (52) versehen ist, wobei die Schlitze (46, 47, 48) jeweils in Fluchtung mit zusätzlichen Bohrlöchern (49, 50, 51) liegen, die zwischen den Schlitzen (46, 47, 49) und den distanzstücknahen Bohrlöchern (40, 24, 42) liegen.

6. Verdübelungs-Bohrlehre nach Anspruch 1, dadurch gekennzeichnet, daß die Grundplatte (60) in einem rahmenförmigen Rückenschenkel (62) einer Schraubzwinge (63) verschiebbar, mit in den Zwingenraum (65) ragenden Distanzstück (61), gelagert ist, und daß der Tischauflageschenkel (76) der Zwinge (63) mit ein oder mehreren Bohrlöchern (73, 74, 75) versehen ist, deren Abstand zum Rückenschenkel (62) der Zwinge (63) gleich dem Abstand der grundplattenseitigen Bohrlöcher (70, 71, 72) vom Distanzstück (61) ist.

## Claims

1. Doweling hole gauge (23) for two plates, boards or similar workpieces to be dowelled together, with two receiving spaces (28, 29) for workpieces lying one above the other which are separated by a distancing piece (27) projecting away at right angle from a base plate (26), on which distancing piece both workpieces may be clamped firmly at the same time at their flat sides and with the front surfaces abutting against the base plate (26), whereby in the base plate (26) at least one bore hole (25) leading into a receiving space (29) for the workpiece is provided, characterized in that in the base plate (7, 26, 60) at least one additional bore hole (17, 24, 68) is provided leading into the other receiving space (4, 28, 58) for the workpiece, which hole is disposed at the same distance from the distancing piece (6, 27, 61) as the other bore hole (18, 25, 71) and in the same plane standing perpendicularly to the lateral wall of the distancing piece just as the other bore hole (18, 25, 71).

2. Doweling hole gauge as in claim 1, characterized in that for one of the receiving spaces (28) for the workpiece a shiftable, firmly clamping arrangement (31) attachable according to choice to the distancing piece (27) or to the base plate (26) has been provided for the workpiece, and in that the workpiece may be clamped firmly in this receiving space (28) for the workpiece correspondingly either lying or in an upright position.

3. Doweling hole gauge as in claim 2, characterized in that the arrangement (31) for clamping firmly consists of a cantilever piece (33) that may be stuck to the distancing piece (27) or the base plate (26) in a torsionally fixed manner with a clamping screw (34) guided therein.

4. Doweling hole gauge as in one or several of the preceding claims, characterized in that several bore holes (40, 24, 42; 41, 25, 43) assigned in pairs to each other and variable in their diameter lead into each receiving space (28, 29) for the workpiece.

5. Doweling hole gauge as in one of the claims 1 to 4, characterized in that the base plate (26) is developed at least in the area of a receiving space (28) for the workpiece as a flat plate (44) which at its edge (45) facing away from the distancing piece is provided with slits (46, 47, 48) for the measuring of dowels (52) attached at another workpiece (53), whereby the slits (46, 47, 48) always lie in alignment with additional bore holes (49, 50, 51) which lie between the slits (46, 47, 48) and the bore holes (40, 24, 42) close to the distancing piece.

6. Doweling hole gauge as in claim 1, characterized in that the base plate (60) is disposed shiftably in a frameshaped back leg (62) of a screw clamp (63), with the distancing piece (61) projecting into the clamping space (65), and in that the leg (76) resting on the table oof the clamp (63) is provided with one or several bore holes (73, 74, 75) the distance of which in relation to the back leg (62) of the clamp (63) is equal to the distance of the bore holes (70, 71, 72) on the side of the base plate in relation to the distancing piece (61).

## Revendications

1. Gabarit de perçage pour chevillage (23), pour deux plaques, planches ou pièces de travail analogues à cheviller l'une à l'autre, comportant deux espaces de réception de pièce de travail (28, 29) superposés, qui sont séparés par une pièce intercalaire (27) saillant à angle droit d'une plaque de base (26) et contre laquelle peuvent être serrées simultanément deux pièces de travail, à plat et leurs faces frontales en butée contre la plaque de base (26), un trou de perçage (25) au moins, débouchant dans un des espaces de réception de pièces de travail (29), étant prévu dans la plaque de base (26) caractérisé par le fait que, dans la plaque de base (7, 26, 60), est prévu au moins un autre trou de perçage (17, 24, 68) débouchant dans l'autre espace de réception de pièce (4, 28, 58) et qui est situé à la même distance de la pièce intercalaire (6, 27, 61) que l'autre trou de perçage (18, 25, 71) et dans le même plan, perpendiculaire à la paroi latérale de la pièce intercalaire, que l'autre trou de perçage (18, 25, 71).

2. Gabarit de perçage pour chevillage selon la revendication 1, caractérisé par le fait que, pour l'un des espaces de réception de pièce de travail (28), est prévu un moyen de serrage (31), pour la pièce de travail, amovible, et applicable au choix sur la pièce intercalaire (27) ou sur la plaque de base (26) et la pièce de travail peut, selon le cas choisi, être serrée allongée ou debout dans cet espace de réception de pièce (28).

3. Gabarit de perçage pour chevillage selon la revendication 2, caractérisé par le fait que le moyen de serrage (31) est constitué par une pièce en console (33) pouvant être montée fixe en torsion sur la plaque de base (26) ou sur la pièce intercalaire (27) et dans laquelle est guidée une vis serre-joint (34).

4. Gabarit de perçage pour chevillage selon l'une ou plusieurs des revendications précédentes, caractérisé par le fait que, dans chacun des espaces de réception de pièce de travail (28, 29), débouchent plusieurs trous de perçage (40, 24, 42; 41, 25, 43) de diamètres différents, associés par paires.

5. Gabarit de perçage pour chevillage selon l'une des revendications 1 à 4, caractérisé par le fait que la plaque de base (26) est formée, au moins dans la zone d'un espace de réception de pièce (28), par une plaque plane (44) qui est munie, sur son bord (45) éloigné de la pièce intercalaire (27), de rainures (46, 47, 48) pour recevoir des chevilles (52) appliquées sur une autre pièce de travail, les rainures (46, 47, 48) étant, chacune, dans l'alignement de trous de perçage additionnels (49, 50, 51) situés entre les rainures (46, 47, 48) et les trous de perçage (40, 24, 42) proches de la pièce intercalaire.

6. Gabarit de perçage pour chevillage selon la revendication 1, caractérisé par le fait que la plaque de base (60) est montée coulissante dans un montant à dos (62) en forme de cadre d'un serre-joint (63) avec une pièce intercalaire saillante dans l'espace du serre-joint, et la branche d'appui en forme de table (76) du serre-joint (63) est munie d'un ou plusieurs trous de perçage (73, 74, 75) dont l'écartement par rapport au montant de dos (62) du serre-joint (63) est égal à l'écartement des trous de perçage, côté plaque de base (70, 71, 72) par rapport à la pièce intercalaire (61).

FIG.1

FIG.2

FIG.3

FIG.5

FIG.4

FIG.6

FIG.7